# FASCICULE DE BREVET EUROPEEN

(11) **EP 1 119 196 B1**
(45) Date de publication et mention de la délivrance du brevet: **14.12.2005**
(21) Numéro de dépôt: 01440008.9
(22) Date de dépôt: 19.01.2001
(51) Int. Cl.: H04N 7/14

(54) **Dispositif de borne de communication destinée notamment à être installée dans un lieu public.**
Kommunikationsendgerät insbesondere zur Installation an einem öffentlichen Platz
Terminal device for communication especially for installation in a public area

(30) Priorité: 20.01.2000 FR 0000724
(43) Date de publication de la demande: 25.07.2001
(73) Titulaire: Aghina, Bernard, 67000 Strasbourg (FR)
(72) Inventeur: Aghina, Bernard, 67000 Strasbourg (FR)
(74) Mandataire: Arbousse-Bastide, Jean-Claude Ph.

(56) Documents cités:
- EP-A- 0 456 248
- WO-A-92/14338
- GB-A- 2 308 296
- US-A- 4 400 725
- PATENT ABSTRACTS OF JAPAN vol. 1997, no. 01, 31 janvier 1997 (1997-01-31) & JP 08 234680 A (SHIMADZU CORP), 13 septembre 1996 (1996-09-13)

## Description

La présente invention a pour objet un dispositif de borne audiovisuelle destinée notamment à être installée dans un lieu public de manière à créer une liaison visuelle et sonore permanente entre des personnes se situant dans des lieux différents et éloignés. Le document GB-A-2 308 296 montre un exemple de ce genre de dispositif.

Les villes cherchent aujourd'hui à développer entre elles des liens en signe d'amitié et de solidarité et à s'ouvrir sur le monde en favorisant la communication des personnes se situant dans un lieu public avec d'autres personnes se situant dans un lieu public d'une autre ville.

La présente invention a pour but de proposer un dispositif de borne permettant à des personnes situées dans un lieu public donné de pouvoir communiquer directement avec d'autres personnes situées dans un autre lieu éloigné et équipé d'un tel dispositif de façon permanente.

Le dispositif de borne de communication selon la présente invention se caractérise essentiellement en ce qu'il comporte une borne munie d'au moins un écran de visualisation associé à une caméra vidéo et des moyens audio reliés à une unité centrale électronique comportant un circuit de transmission et de réception du son et de l'image, ledit circuit étant connecté avec un ou plusieurs autres circuits de transmission et de réception de dispositifs de borne éloignés de manière à établir avec ces derniers une liaison de communication active permanente et réciproque.

Le dispositif de borne sera fixé au sol ou apposé contre un support ou encastré dans un support tel que, par exemple, le mur d'un édifice.

Les moyens audio associés à un écran de visualisation sont au moins un microphone et au moins un ou plusieurs haut-parleurs.

Dans un mode de réalisation préférentiel de l'invention la borne est constituée d'une enveloppe de forme rectangulaire d'une certaine épaisseur destinée à être disposée verticalement et dont au moins l'une de ses faces opposées de plus grande longueur est équipée d'un écran vidéo.

La borne rectangulaire sera de préférence ancrée dans le sol en se présentant verticalement dans le sens de sa plus grande longueur.

Un système d'éclairage pourra avantageusement équiper la face du dispositif de borne munie d'un écran vidéo s'activant automatiquement à la tombée de la nuit.

L'enveloppe de la borne sera de préférence réalisée à partir d'un verre de protection, et plus particulièrement un verre trempé et/ou feuilleté pouvant intégrer un film plastique luminescent, mais aussi être réalisée à partir d'une matière plastique ou métallique hors écran.

Ainsi à toute heure du jour et de la nuit, de part et d'autre de ces "fenêtres", les gens pourront se croiser, s'apercevoir, se rencontrer par hasard, se donner rendez-vous, se parler, échanger un salut ou un sourire.

Les avantages et les caractéristiques de la présente invention ressortiront plus clairement de la description qui suit et qui se rapporte au dessin annexé, lequel en représente un mode de réalisation non limitatif.
- la figure 1 représente une vue en perspective du dispositif de borne selon l'invention dans mode de réalisation préférentielle.
- la figure 2 représente une vue en perspective du même dispositif de borne selon l'invention et, par transparence, des différents éléments qu'il renferme.

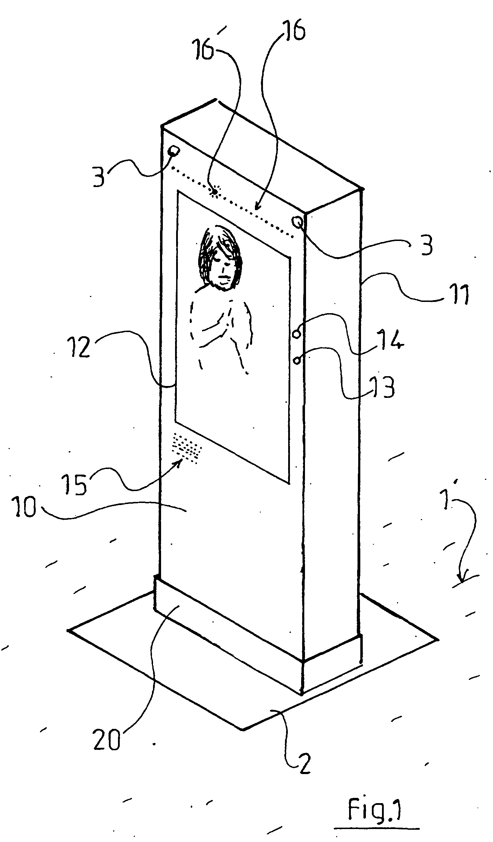

Si on se réfère à la figure 1 on peut voir qu'un dispositif de borne de communication selon l'invention est constitué d'une borne 1 de forme rectangulaire d'une certaine épaisseur encastrée verticalement dans le sens de sa plus grande longueur dans le sol 1' d'un lieu public, laquelle borne 1 comprend sur chacune de ses deux faces latérales opposées 10 et 11 de plus grande longueur un écran vidéo 12, dont un seul est visible, un microphone 13, une caméra vidéo 14 et un haut parleur 15.

On peut voir également que la borne 1 comporte au dessus de chaque écran vidéo 12 une rangée de diodes électroluminescentes 16 représentant les 24 fuseaux horaires et figurant la course du soleil par leur éclairement tout en indiquant la position du lieu géographique de la borne avec laquelle est connectée la présente borne 1 par une diode 16' allumée en permanence et comportant à son niveau un signe distinctif, non représenté, précisant le lieu en question.

Les dimensions de la borne 1 sont adaptées pour permettre une communication entre deux personnes proche d'une situation où deux personnes communiquent normalement en vis à vis.

La base de la borne 1 comporte avantageusement une plinthe périphérique 20 de manière à la protéger et qui est solidarisée à une plaque de sol métallique 2 permettant de reconstituer le revêtement du sol 1' détruit par l'installation de la borne 1.

Chaque face de communication 10 et 11 de la borne 1 peut être équipée de spots 3 pour l'éclairage du sujet, s'activant automatiquement à la tombée de la nuit.

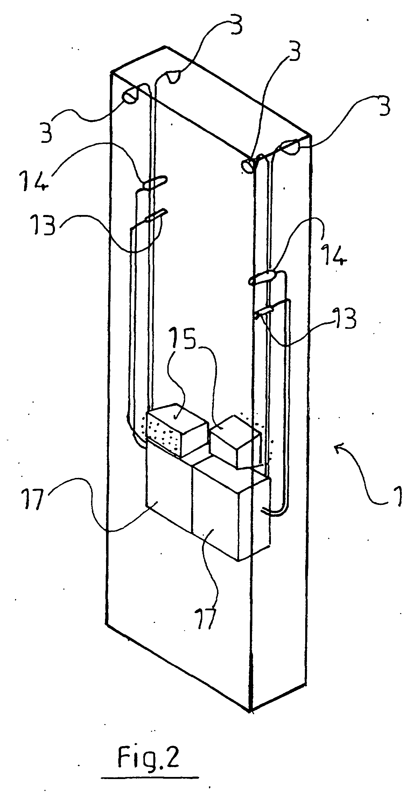

Si on se réfère à la figure 2 on peut voir que les haut-parleurs 15, les microphones 13, et les caméras vidéo 14 de chaque face de communication 10, 11 sont connectés à une unité centrale électronique 17 ainsi que l'écran 12 qui n'est pas représenté, laquelle unité centrale 17 comporte un circuit vidéo-audio permettant d'une part la transmission du son et de l'image vidéo vers une autre borne avec laquelle elle est connectée et d'autre part la réception de l'image et du son provenant de cette dernière.

Les diodes 16 sont connectées électriquement à l'unité centrale 17 qui renferme un circuit de gestion de leur éclairement.

La connexion entre les deux bornes est effectuée par un moyen de liaison tel que la liaison "ADSL" qui est peu coûteuse et en cours de généralisation.

Pour chaque face de communication 10 ou 11, la caméra vidéo 14, l'écran vidéo 12, le microphone 13 et le haut parleur 15 fonctionnent
- soit en permanence de manière à permettre à une personne de pouvoir engager instantanément une conversation avec une autre personne se situant dans le champ d'une autre borne placée à un endroit différent
- soit l'écran 12, ainsi qu'éventuellement la caméra vidéo 14, le microphone 13 et le haut-parleur 15 pouvant être activés manuellement à l'aide d'un simple bouton poussoir ou autre interrupteur soit automatiquement à l'aide d'un capteur de présence, la borne restant toujours en activation permanente au niveau de sa liaison de communication avec une ou plusieurs bornes éloignées.

La borne sera de préférence réalisée à partir d'un verre de protection trempé et feuilleté qui pourra intégrer une feuille intercalaire en matière plastique luminescente.

Les deux faces de communication 10 et 11 de la borne 1 peuvent ainsi par exemple être reliées à la même borne se situant à un endroit différent et éloigné ou bien chaque face 10 ou 11 de la borne 1 peut être reliée à une borne différente et éloignée et située chacune dans un même lieu ou dans un lieu différent.

Le dispositif de borne selon la présente invention permet ainsi d'envisager un grand nombre de configurations possibles de communications entre des lieux différents et éloignés.

## Revendications

1. Dispositif de borne de communication destinée notamment à être installée dans un lieu public de manière à créer une liaison visuelle et sonore permanente entre des personnes se situant dans des lieux différents et éloignés comportant une borne (1) munie d'au moins un écran de visualisation (12) associé à une caméra vidéo (14) et des moyens audio (13,15) reliés à une unité centrale électronique (17,17') comportant un circuit de transmission et de réception du son et de l'image **caractérisé en ce que** ladite borne présente une forme rectangulaire d'une certaine épaisseur dont au moins l'une de ses faces de plus grande longueur est équipée d'un écran de visualisation (12) et **en ce que** ledit circuit est connecté avec un ou plusieurs autres circuits de transmission et de réception de dispositifs de borne éloignés de manière à établir avec ces derniers une liaison de communication active permanente ou activée automatiquement à l'approche d'une personne au moyen d'un détecteur de présence.

2. Dispositif de borne selon la revendication 1 **caractérisé en ce que** la borne (1) est équipée d'un système d'éclairage (3) de la zone de communication s'activant automatiquement à la tombée de la nuit.

3. Dispositif de borne selon l'une quelconque des revendications précédentes **caractérisé en ce que** la borne (1) est réalisée à partir d'un verre de protection.

4. Dispositif de borne selon la revendication 3 **caractérisé en ce que** le verre est un verre feuilleté et trempé intégrant un film plastique luminescent.

5. Dispositif de borne selon l'une quelconque des revendications précédentes **caractérisé en ce que** la borne (1) comprend une rangée de diodes électroluminescentes (16) représentant les fuseaux horaires et figurant la course du soleil par leur éclairement.

6. Installation du dispositif de borne selon l'une quelconque des revendications précédentes **caractérisé en ce qu'**il est susceptible d'être fixé au sol (1') ou apposé contre un support ou encastré dans un support tel que, par exemple, le mur d'un édifice.

7. Installation du dispositif de borne selon la revendication 6 **caractérisé en ce qu'**il est ancré dans le sol (1') et **en ce que** la borne (1), qui présente une forme rectangulaire d'une certaine épaisseur dont au moins l'une de ses deux faces opposées de plus grande longueur est équipée d'un écran de visualisation (12) comporte une plinthe périphérique (20) solidarisée à une plaque de sol métallique (2).

## Patentansprüche

1. Kommunikationssäulenvorrichtung, die insbesondere dazu dient, derart an einem öffentlichen Ort installiert zu werden, dass sie eine permanente visuelle und akustische Verbindung zwischen Personen bildet, die sich an verschiedenen und voneinander entfernten Orten befinden, die eine Säule (1) aufweisen, die mit zumindest einem Anzeigemonitor (12) versehen ist, der einer Videokamera (14) und Audiomitteln (13, 15) zugeordnet ist, die mit einer elektronischen Zentraleinheit (17, 17') verbunden sind, die einen Sende- und Empfangskreis für den Ton und das Bild aufweist, **dadurch gekennzeichnet, dass** die Säule eine rechteckige Form mit einer bestimmten Dicke aufweist, von der zumindest die eine ihrer Seiten mit einer größeren Länge mit einem Anzeigemonitor (12) ausgerüstet ist und **dadurch gekennzeichnet, dass** der Kreis derart mit einem oder mehreren anderen Sende- und Empfangskreisen von entfernten Säulenvorrichtungen verbunden ist, dass mit diesen eine permanent aktive oder eine automatisch bei der Annäherung einer Person durch einen Anwesenheitsmelder aktivierte Kommunikationsverbindung erzeugt wird.

2. Säulenvorrichtung nach Anspruch 1, **dadurch gekennzeichnet, dass** die Säule (1) mit einem Beleuchtungssystem (3) der Kommunikationszone ausgerüstet ist, das sich automatisch bei einbrechender Nacht aktiviert.

3. Säulenvorrichtung nach einem der vorhergehenden Ansprüche, **dadurch gekennzeichnet, dass** die Säule (1) aus einem Schutzglas realisiert wird.

4. Säulenvorrichtung nach Anspruch 3, **dadurch gekennzeichnet, dass** das Glas ein Mehrschichtenhartglas ist, das eine selbstleuchtende Plastikfolie umfasst.

5. Säulenvorrichtung nach einem der vorhergehenden Ansprüche, **dadurch gekennzeichnet, dass** die Säule (1) eine Reihe Elektrolumineszenzdioden (16) umfasst, die die Zeitzonen darstellen und durch ihre Beleuchtung den Lauf der Sonne anzeigen.

6. Installation der Säulenvorrichtung nach einem der vorhergehenden Ansprüche, **dadurch gekennzeichnet, dass** sie am Boden (1') befestigt oder gegen einen Träger angebracht oder in einen Träger, wie zum Beispiel die Mauer eines Bauwerkes, eingebaut werden kann.

7. Installation der Säulenvorrichtung nach Anspruch 6, **dadurch gekennzeichnet, dass** sie im Boden (1') verankert ist und dass die Säule (1), die eine rechteckige Form mit einer bestimmten Dicke aufweist, von der zumindest die eine ihrer gegenüberliegenden Seiten mit einer größeren Länge mit einem Anzeigemonitor (12) ausgerüstet ist, eine umlaufende Stoßleiste (20) umfasst, die mit einer Metallbodenplatte (2) verbunden ist.

## Claims

1. Communication terminal device intended in particular to be installed in a public place in such a way as to create a permanent visual and sound link between people in two different, distant places, consisting of a terminal (1) equipped with at least one display screen (12) combined with a video camera (14) and audio equipment (13, 15) linked to an electronic central unit (17, 17') consisting of a sound and image transmission and reception circuit **characterised in that** the said terminal is rectangular in shape and of a certain thickness and at least one of its longer sides is equipped with a display screen (12) and **in that** the said circuit is connected to one or more other transmission and reception circuits in remote terminal devices in such a way as to establish between the latter a communication link that is permanently active or activated when a person approaches by means of a proximity sensor.

2. Terminal device according to claim 1 **characterised in that** the terminal (1) is equipped with a system of lighting (3) the area of communication, activating automatically at nightfall.

3. Terminal device according to any one of the preceding claims **characterised in that** the terminal (1) is made from protective glass.

4. Terminal device according to claim 3 **characterised in that** the glass is laminated, tempered safety glass integrating a luminescent plastic film.

5. Terminal device according to any one of the preceding claims **characterised in that** the terminal (1) includes a row of light-emitting diodes (16) representing the time zones and showing the path of the sun as they light up.

6. Installation of the terminal device according to any one of the preceding claims **characterised in that** it is liable to be fixed to the floor (1') or placed against a support or fitted into a support such as, for example, the wall of a building.

7. Installation of the terminal device according to claim 6 **characterised in that** it is anchored in the floor (1') and **in that** the terminal (1), which is rectangular in shape and of a certain thickness, and one of whose two opposing longer sides is equipped with a display screen (12), includes a peripheral baseboard (20) integral with a metal floor plate (2).
